# EUROPEAN PATENT SPECIFICATION

(11) **EP 0 285 411 B1**
(45) Date of publication and mention of the grant of the patent: **20.09.1995**
(21) Application number: 88302873.0
(22) Date of filing: 30.03.1988
(51) Int. Cl.: C08L 81/02, C08K 3/34

(54) **Composition of polyarylene thioether**
Polyarylenthioäther-Zusammensetzung
Composition thioéther de polyarylène

(30) Priority: 31.03.1987 JP 79187/87
(43) Date of publication of application: 05.10.1988
(73) Proprietor: KUREHA KAGAKU KOGYO KABUSHIKI KAISHA, Tokyo 103 (JP)
(72) Inventor: Ichikawa, Yukio, Iwaki-shi Fushima-ken (JP); Katto, Takayuki, Iwaki-shi Fushima-ken (JP)
(74) Representative: Woods, Geoffrey Corlett

(56) References cited:
- EP-A- 0 288 308
- FR-A- 2 410 661

## Description

The present invention relates to polyarylene thiother (hereinafter referred to as PATE) compositions.

PATE is a resin developed as a heat-resistant, chemical-resistant and flame-resistant thermoplastic resin. Since PATE is crystalline it can be melt processed by, for example, injection molding or extrusion molding. A characteristic of molded products obtained from PATE is that they possess excellent physical properties such as dimensional stability, strength, hardness and insulating property.

Taking advantage of these characteristic points, PATE is used in the fields of, for example, electricity, electronics, cars, aeroplanes, precision machinery and chemical engineering.

However, conventional PATE has a defect in that its crystallization rate is low. This often results in coarse spherulites. Because of this defect, when PATE is fabricated, for example by injection molding, there has been a problem which leads to practical physical defects such as a long molding cycle, the occurrence of many flashes, and poor mechanical properties of molded products.

To improve the defect, use of a nucleating agent can be considered. However, there is no such agent, to our knowledge, that is effective for all crystalline polymers and there is certainly no such agent effective for PATE.

As a result of the present inventors' extensive studies for a nucleating agent effective for PATE, it has been found that kaoline has the effects of improving the crystallization rate and of micronizing the spherulites.

The present invention has been completed based on this finding.

The present invention provides a polyarylene thioether composition comprising a polyarylene thioether having a repeating unit 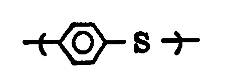
as the main constituent; characterised in that the composition also comprises from 0.001 to 10 parts by weight of kaoline having a mean particle diameter of from 0.03 to 2 µm per 100 parts by weight of said polyarylene thioether.

The present invention also provides a method of obtaining a molded article comprising a polyarylene thioether, characterised by injection molding a composition as defined above.

The composition may further comprise 0.01 to 300 parts by weight of an inorganic filler other than kaoline and/or a fibrous filler per 100 parts of said polyarylene thioether.

The PATE composition of the present invention has a high crystallization rate, forms a minute spherulite structure, has a short melt-molding cycle, has only a small amount of flashes and gives molded products having excellent mechanical properties.

The 50% crystallization time, τ_{½}, of the composition of the present invention at 250°C is not more than 1/3 that of PATE not containing kaoline.

The composition of the present invention has characteristic points that the composition has a high crystallization rate and forms a minute spherulite structure, and accordingly it can preferably be used for various fabrications, such as extrusion molding, inflation molding, injection molding, compression molding and blow molding. Of these fabrications, it is preferably used in injection molding.

Although PATE polymers generally contain a mixture of repeating units of formula (̵Ar - S)̵ wherein Ar is an arylene group, the PATE used in the composition of the invention has paraphenylene groups as the main constituent.

The words "has paraphenylene groups as the main constituent" mean that the PATE contains paraphenylene groups in an amount of not less than 60 mol%, preferably not less than 75 mol% of all arylene groups.

PATE having the paraphenylene group as the main constituent is preferable from the viewpoint of physical properties of the composition such as heat-resistance, moldabitity and mechanical properties.

As an arylene group other than the paraphenylene group as the main constituent, a m-phenylene group, 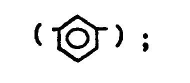
o-phenylene group, 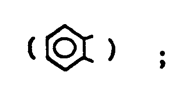
alkyl-substituted phenylene group, 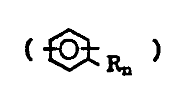
(R is an alkyl group, preferably a lower alkyl group and n is an integer of 1 to 4); p,p'-diphenylene sulfone group, 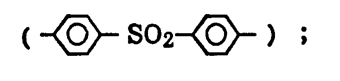
p,p'-biphenylene group, 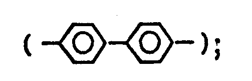
p,p'-diphenylene ether group, 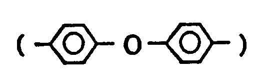
p,p'-diphenylene carbonyl group, 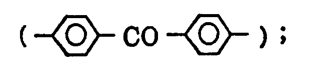
naphthalene group, 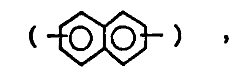
can be used.

From the viewpoint of processability, a copolymer containing different kinds of repeating units is preferable to a homopolymer consisting only of the repeating unit 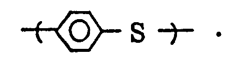
As the copolymer, a copolymer of 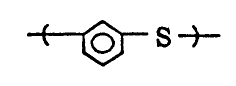
and 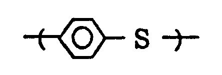
is preferred. Particularly, those containing the repeating units in a block form is preferred to those containing them in random form(for instance, as described in EP-A-166,451), because the block-copolymer has remarkably excellent physical properties (for example heat resistance and mechanical property) although the block- and random-copolymers are substantially equal in their processabilities. 5 to 50 mol% of repeating unit of 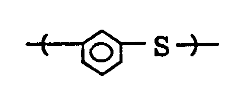
in the block copolymer is preferable and 10 to 25 mol% is particularly preferable.

As the PATE according to the present invention, those having a substantially linear structure are preferred from the viewpoint of the processability and the physical property. The words "those having a substantially linear structure" do not mean a polymer obtained by curing such as oxidation or thermal cross-linking but mean a polymer obtained by condensation polymerization of a monomer substantially having a bifunctional monomers as the main body.

However, within a range of not spoiling the physical properties of the molded products, a cross-linked PATE obtained by using a minute amount of a cross-linking agent (for instance, 1,2,4-trihalobenzene) during polymerization is allowable. As the PATE according to the present invention, the PATE which is not thermally cross-linked is preferable. Because the PATE which is thermally cross-linked has many branched and cross-linked structures, its molded product has poor mechanical properties and is severely colored and the thermal stability of the composition during melt processing is low. Accordingly, such a PATE is not preferable from the viewpoint of physical properties and processability of the composition and physical properties of the molded product.

As the PATE according to the present invention, those having a melting point of over 250°C are preferable. When the melting point is below 250°C, the largest characteristic point as a heat-resistant polymer is spoiled.

The PATE which is favorable for the present invention can generally be manufactured by bringing an alkali metal sulfide (for instance, sodium sulfide) and a halo-aromatic compound consisting mainly of paradihalobenzene into a dehalogenation- and sulfidation-reaction in an aprotic, organic polar solvent (for instance, N-methylphyrrolidone). Such a PATE can be economically manufactured by the method described in US-A-4,645,826. As an another method, the method of obtaining a PATE of a high molecular weight by adding a large amount of a polymerization aid such as salts of a carboxylic acid can be used (refer to US-A-3,919,177). However, the latter method is disadvantageous from an economical standpoint.

Kaoline is a hydrated aluminum silicate represented by the basic chemical formula, Al₂Si₂O₅(OH)₄. nH₂O and its representative chemical composition is as follows:

| | | | |
|---|---|---|---|
| SiO₂ | 42 to 55 %, | CaO | 0 to 1 % |
| Al₂O₃ | 37 to 45 %, | MgO | 0 to 0.3 % |
| TiO₂ | 0 to 3 % | K₂O | 0 to 0.5% and |
| Fe₂O₃ | 0 to 1 % | Na₂O | 0 to 0.6 %. |

As kaoline used in the present invention, a commercialized kaoline or its pulverized product can be used. The amount of kaoline added is 0.001 to 10 parts, preferably 0.01 to 8 parts and more preferably 0.01 to 5 parts, by weight to 100 parts by weight of the PATE. When kaoline is present in an amount less than 0.001 parts by weight, the effect of the nucleating agent is poor, and when kaoline is present in an amount more than 10 parts by weight, the effect is not improved in proportion to the amount of kaoline. The addition of more than 10 parts by weight of kaoline is pointless.

The addition of kaoline can be done by any method. For instance, there are a methods of adding kaoline powder to a powdery PATE, adding kaoline at the time of molding PATE and adding kaoline to the slurry of the PATE polymer after the step of polymerization and dehydrating and drying the mixture. Furthermore, there is a method in which kaoline is combined in an amount of more than the predetermined amount with PATE to form a so-called master batch and kneading this master batch with PATE. Thus a composition uniformly containing predetermined concentration of kaoline can easily be obtained.

Because the finer the kaoline powder is, the higher its dispersibility in PATE and accordingly its nucleating effect is, it is desirable to use kaoline having an average diameter of not larger than 2 µm, preferably of not larger than 1.5 µm, more preferably of up to 1 µm. When the mean particle diameter of the kaoline is larger than 2 µm, its effect as a nucleating agent is poor. When the mean particle diameter is not larger than 0.03 µm, it is difficult to handle the kaoline and it takes time to mix it with PATE. The mean particle diameter is measured by a particle size distribution tester of the centrifugal sedimentation type (made by SHIMAZU SEISAKUSHO, Ltd., Model: SA-CP-20).

The composition of the present invention comprises PATE, kaolin as a nucleating agent and, when necessary, a filler.

The words "comprises" means that the composition may contain supplementary component(s) unless the addition of the component is contrary to the purpose of the present invention (details will be described later).

The composition of the present invention includes not only the material formed by mixing each component as powder but also the material of which the resin component is in a coherent state formed through its molten state. The coherent state is the representative one and is generally produced as pellets. The powdery state of the composition can be produced by uniformly mixing each component in a blender, a mixer or a mill.

Kaoline in the present invention is used as the nucleating agent. The composition of the present invention is characterized in that the 50% crystallization time, τ _{1/2}, (at 250°C) is not longer than 1/3, usually not longer than 1/5, as compared to the composition without kaoline. The method for determining the 50% crystallization time, τ _{1/2}, is shown later in the Examples.

The supplementary components will now be further described.

Although the PATE composition of the present invention can be singly applied to various melt-processing processes, it can also be used as a composition prepared by further combining (i) fibrous fillers such as glass fibers, carbonaceous fibers, silica fibers, alumina fibers, silicon carbide fibers, zirconia fibers, calcium titanate fibers, wollastonite, calcium sulfate fibers or aramide fibers and/or (ii) inorganic powdery fillers which are talc, mica, clay, calcium carbonate, magnesium carbonate, calcium silicate, magnesium silicate, silica, alumina, titanium white, carbon black, calcium sulfate, iron oxide, zinc oxide or copper oxide.

The PATE composition of the present invention can be used as a composition component of one or more than one kind of the materials selected from the group consisting of (iii) synthetic resins other than PATE, such as, polyolefin, polyester, polyamide, polyimide, polyether imide, polycarbonate, polyether sulfone, polyether ketone, polyether ether ketone, polyarylene, polyacetal, polyvinylidene fluoride, polytetrafluoroethylene, polystyrene, ABS resin, epoxy resin, urethane resin, silicone resin and phenol resin, or (iv) elastomers, such as, polyolefin rubber, fluorine rubber, silicone rubber, hydrogenated SBR, butyl rubber, polyester rubbers or polyamide rubbers.

If necessary, additive(s) such as a coupling agent, antioxidant, coloring matter, ultraviolet ray-absorbing agent and wax can be added to the composition..

In order to maintain the characteristic points of the composition of the present invention, it is preferable that the PATE is contained therein in an amount of at least not less than 25 wt%, more preferably not less than 30 wt% and particularly preferably not less than 50 wt%.

One concrete example of a composition is the one prepared by combining 0.001 to 10 parts by weight of kaoline, 0.1 to 300 parts by weight of an inorganic filler [above (i)] and/or a fibrous filler [above (ii)] with 100 parts by weight of PATE having a repeating unit of 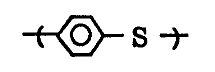
as the main constituent. It goes without saying that the composition can further contain a synthetic resin [above (iii)] and/or an elastomer [above (iv)].

The PATE composition of the present invention (including the complex compounds) can be utilized in various fields taking advantage of its characteristic points, such as the high crystallization rate and minute spherulite structures. For instance, the composition is favorably used in producing various molded products by injection molding and sheets, films, pipes, fibers, for example, by extrusion molding. Injection molding is favorably used because of its characteristic point, i.e., a short molding cycle.

### EXAMPLES

### Methods for evaluating the specific characters of the composition:

### (1) Measurement of the crystallization rate.

With a measuring apparatus DSC 7 (manufactured by Perkin-Elmer Co.), the 50% crystallization time, τ _{1/2} , of a composition was measured by a conventional method [for instance, refer to "KOBUNSHI KAGAKU", 25 155(1968)]. The measuring conditions are as follows:

After heating each of the sample sheets for 20 seconds at 320°C, the heated sample sheet was maintained for 10 seconds under a pressure of 50 kg/cm² G and then put into iced water to obtain a rapidly cooled press sheet (hereinafter referred to as "rapidly cooled press sheet").

Alter melting about 5 mg of a rapidly cooled press sheet sample for 1 minute at 340°C in a flow of nitrogen gas, the molten sample was rapidly cooled to its crystallization temperature to obtain an isothermal crystallization curve of the sample at the temperature.

From the isothermal crystallization curve, τ _{1/2}, which is the time that is necessary to crystallize half (1/2) of the component which is crystallizable at 250°C, is obtained. A shorter 50% crystallization time means a higher crystallization rate.

### (2) Measurement of the size of spherulite.

After maintaining a rapidly cooled press sheet sample in a molten state for 1 minute at 340°C under nitrogen gas, the sample was rapidly cooled to 250°C to isothermally crystallize. The size of spherulites when they collided with each other at 250°C was measured with a polarizing microscope having a beating stage (a cooling and beating apparatus for a microscope, manufactured by Lincom Co., Model: TH-600).

### EXAMPLE 1:

Into an autoclave, 37.3 kg of hydrated sodium sulfide (purity: 46.1 %) and 100 kg of N-methylpyrrolidone (NMP) were introduced, and the content of the autoclave was heated to 190°C to distill 14.3 kg of water and 4.06 kg of NMP out. Then, 35.7 kg of p-dichlorobenzene were charged therein and polymerization was carried out for 3 hours at 220°C.

Then, 7.7 kg of water were charged therein and the temperature was raised to 260°C to carry out polymerization for 1 hour.

After collecting the formed polymer from the reaction mixture by sieving and washing the collected polymer with methanol, water, an aqueous 2 % solution of NH₄C1 and water, the washed polymer was dried to obtain a PATE polymer.

The apparent melt viscosity of the obtained PATE polymer at 310°C and a shear rate of 10,000 second⁻¹ was 30 poise.

To 100 parts by weight of a powder of the polymer, 1.0 part by weight of each of the additives shown in Table 1 was added, the mixture was blended in a Henschel mixer and extruded into pellets with an extruder (made by PLABOR Co., Model: BT-30).

The results of examination of the characteristic properties of the obtained composition are shown in Table 1.

As seen from Table 1, the composition according to the present invention has a high crystallization rate and small and uniform sized spherulites.

### EXAMPLE 2:

Into an autoclave, 42.4 kg of hydrated sodium sulfide (purity: 46.07 %) and 93 kg of NMP were introduced, and the content of the autoclave was heated to 190° to distill water out. Then, 36.6 kg of p-dichlorobenzene were charged into the autoclave and polymerization was carried out for 5 hours at 220°C.

Then, 7 kg of water were charged into the autoclave, the temperature was raised to 255°C and the polymerization was performed for another 5 hours.

After collecting the polymer from the reaction mixture by sieving, the collected polymer was washed with methanol, water, an aqueous 2 % solution of NH₄C1 and water and dried to obtain a PATE polymer.

The apparent melt viscosity of the PATE polymer obtained at 310°C and at a shear rate of 200 second⁻¹ was 2,000 poise.

To 100 parts by weight of a powder of the PATE polymer, 40 parts by weight of glass fibers of 13 µm in diameter (manufactured by NIHON DENKI GLASS Co., Ltd.) and 1.0 part by weight of an additive shown in Table 2 were added, and the mixture was extruded into pellets with an extruder (made by PLABOR Co., Model: BT-30).

The results of examination of the characteristic properties of the compositions are shown in Table 2. The size of spherulite of the composition obtained in Example 2 was not measured, because the composition contained additives (for example glass fibers).

As can be seen in Table 2, kaoline of mean particle diameter of not larger than 2 µm in the present invention is also effective in the complex composition with glass fibers.

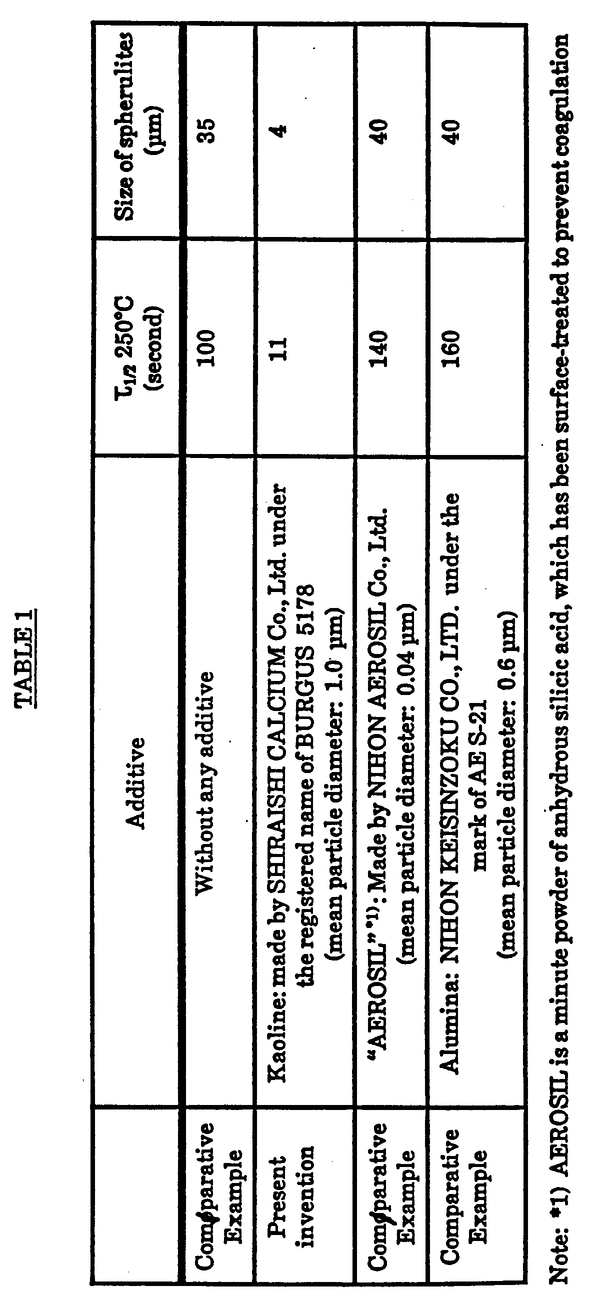

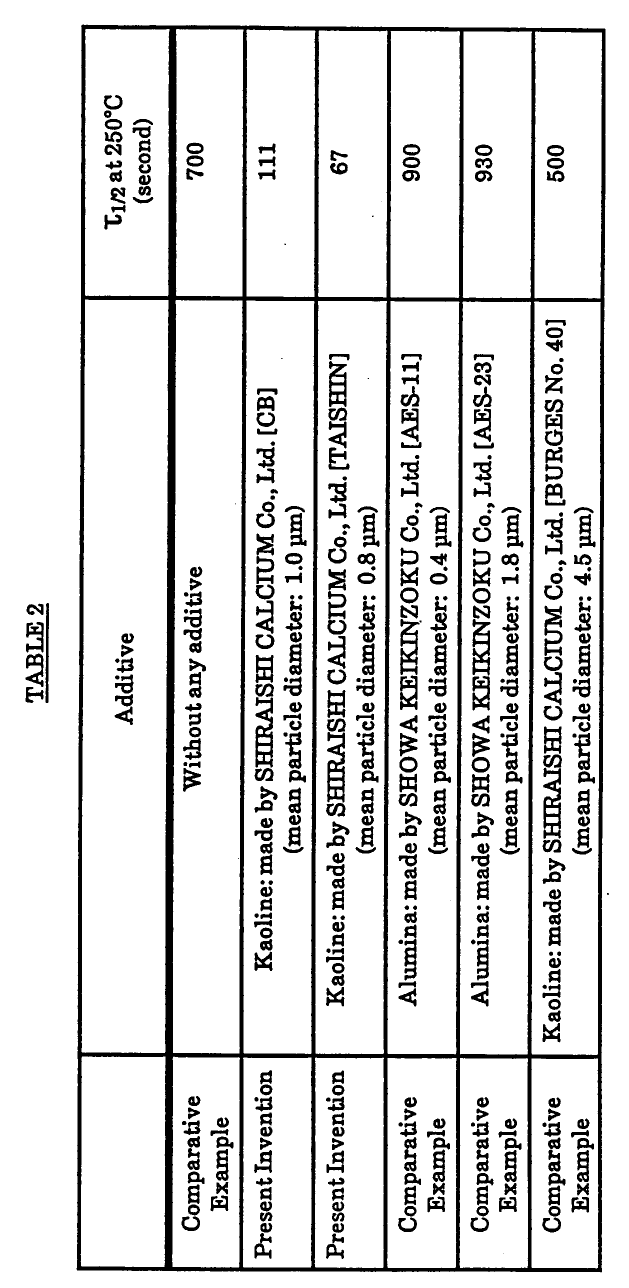

## Claims

1. A polyarylene thioether composition comprising a polyarylene thioether having a repeating unit 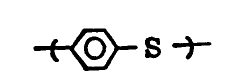 as the main constituent; characterised in that the composition also comprises from 0.001 to 10 parts by weight of kaoline having a mean particle diameter of from 0.03 to 2 µm per 100 parts by weight of said polyarylene thioether.

2. A composition according to claim 1, further comprising from 0.1 to 300 parts by weight of an inorganic powdery filler which is talc, mica, calcium carbonate, magnesium carbonate, calcium silicate, magnesium silicate, silica, alumina, titanium white, carbon black, calcium sulfate, iron oxide, zinc oxide or copper oxide and/or a fibrous filler per 100 parts by weight of said polyarylene thioether.

3. A composition according to claim 1 or 2, wherein the said polyarylene thioether contains not less than 75 mol% of the repeating unit

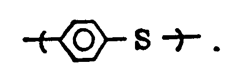

4. A composition according to any one of the preceding claims, wherein the said polyarylene thioether is a block copolymer composed of the repeating units 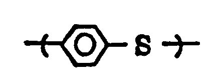 and

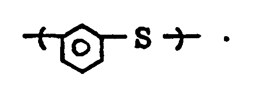

5. A composition according to any one of the preceding claims, wherein the kaoline is present in an amount of from 0.01 to 5 parts by weight of the said polyarylene thioether.

6. A composition according to any one of the preceding claims, wherein the mean particle diameter of the kaoline is up to 1 µm.

7. A composition according to any one of the preceding claims, further comprising another synthetic resin.

8. A composition according to any one of the preceding claims, further comprising an elastomer.

9. A composition according to any one of the preceding claims, containing not less than 50 wt% of the said polyarylene thioether.

10. A method of obtaining a molded article comprising a polyarylene thioether, characterised by injection molding a composition as claimed in any one of the preceding claims.

## Patentansprüche

1. Polyarylenthioether-Zusamensetzung, die als Hauptbestandteil einen Polyarylenthioether mit einer wiederkehrenden Einheit 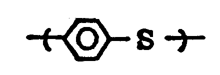 enthält, dadurch gekennzeichnet, daß die Zusammensetzung, bezogen auf 100 Gewichtsteile des Polyarylenthioethers, 0,001 bis 10 Gewichtsteile Kaolin mit einem durchschnittlichen Teilchendurchmesser von 0,03 bis 2 µm enthält.

2. Zusammensetzung gemäß Anspruch 1, die außerdem, bezogen auf 100 Gewichtsteile des Polyarylenthioethers, 0,1 bis 300 Gewichtsteile eines anorganischen, pulverförmigen Füllstoffs, der Talkum, Glimmer, Calciumcarbonat, Magnesiumcarbonat, Calciumsilicat, Magnesiumsilicat, Siliciumdioxid, Aluminiumoxid, Titanweiß, Ruß, Calciumsulfat, Eisenoxid, Zinkoxid oder Kupferoxid ist, und/oder einen faserförmigen Füllstoff enthält.

3. Zusammensetzung gemäß Anspruch 1 oder 2, worin der Polyarylenthioether nicht weniger als 75 Mol-% an wiederkehrenden Einheiten 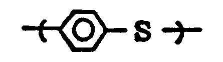 enthält.

4. Zusammensetzung gemäß einem der vorhergehenden Ansprüche, worin der Polyarylenthioether ein aus den wiederkehrenden Einheiten 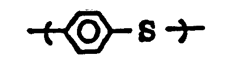 und 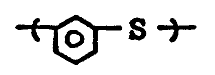 zusammengesetztes Blockcopolymer ist.

5. Zusammensetzung gemäß einem der vorhergehenden Ansprüche, worin das Kaolin in einer Menge von 0,01 bis 5 Gewichtsteile bezogen auf den Polyarylenthioether vorhanden ist.

6. Zusammensetzung gemäß einem der vorhergehenden Ansprüche, worin der durchschnittliche Teilchendurchmesser des Kaolins bis zu 1 µm beträgt.

7. Zusammensetzung gemäß einem der vorhergehenden Ansprüche, die zusätzlich ein anderes synthetisches Harz enthält.

8. Zusammensetzung gemäß einem der vorhergehenden Ansprüche, die zusätzlich ein Elastomer enthält.

9. Zusammensetzung gemäß einem der vorhergehenden Ansprüche, die nicht weniger als 50 Gew.-% des Polyarylenthioethers enthält.

10. Verfahren zur Herstellung eines einen Polyarylenthioether enthaltenden Formkörpers, dadurch gekennzeichnet, daß eine Zusammensetzung gemäß einem der vorhergehenden Ansprüche spritzgegossen wird.

## Revendications

1. Composition de poly(thioéther d'arylène) comprenant un poly(thioéther d'arylène) ayant un motif répétitif 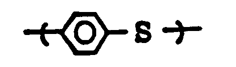 comme constituant principal ; caractérisée en ce que la composition comprend également de 0,001 à 10 parties en poids d'un kaolin ayant un diamètre moyen de particules de 0,03 à 2 µm pour 100 parties en poids de ce poly(thioéther d'arylène).

2. Composition selon la revendication 1, comprenant en outre de 0,1 à 300 parties en poids d'une charge pulvérulente minérale qui est du talc, du mica, du carbonate de calcium, du carbonate de magnésium, du silicate de calcium, du silicate de magnésium, de la silice, de l'alumine, du blanc de titane, du noir de carbone, du sulfate de calcium, de l'oxyde de fer, de l'oxyde de zinc ou de l'oxyde de cuivre et/ou d'une charge fibreuse pour 100 parties en poids de ce poly(thioéther d'arylène).

3. Composition selon les revendications 1 ou 2, dans laquelle ce poly(thioéther d'arylène) ne contient pas moins de 75 moles % du motif répétitif

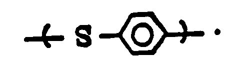

4. Composition selon l'une quelconque des revendications précédentes, dans laquelle ce poly(thioéther d'arylène) est un copolymère séquencé composé des motifs répétitifs 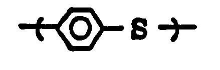 et

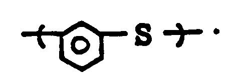

5. Composition selon l'une quelconque des revendications précédentes, dans laquelle le kaolin est présent dans une quantité de 0,01 à 5 parties en poids de ce poly(thioéther d'arylène).

6. Composition selon l'une quelconque des revendications précédentes, dans laquelle le diamètre moyen de particules du kaolin va jusqu'à 1 µm.

7. Composition selon l'une quelconque des revendications précédentes, comprenant en outre une autre résine synthétique.

8. Composition selon l'une quelconque des revendications précédentes, comprenant en outre un élastomère.

9. Composition selon l'une quelconque des revendications précédentes, ne contenant pas moins de 50 % en poids de ce poly(thioéther d'arylène).

10. Procédé d'obtention d'un article moulé comprenant un poly(thioéther d'arylène), caractérisé en ce qu'on moule par injection une composition selon l'une quelconque des revendications précédentes.
